# EUROPÄISCHE PATENTSCHRIFT

(11) **EP 2 091 387 B1**
(45) Veröffentlichungstag und Bekanntmachung des Hinweises auf die Patenterteilung: **10.08.2011**
(21) Anmeldenummer: 07847419.4
(22) Anmeldetag: 27.11.2007
(51) Int. Cl.: A47B 46/00, B60R 5/00, B61D 37/00, B64D 11/00, F16H 25/20

(54) **GEPÄCKAUFBEWAHRUNGSBOX**
STORAGE BOX
BOÎTIER DE CONSIGNE À BAGAGES

(30) Priorität: 30.11.2006 AT 19892006
(43) Veröffentlichungstag der Anmeldung: 26.08.2009
(73) Patentinhaber: Dipl. Ing. Gottfried Steiner, Ingenieurbüro Für Kunststofftechnik, 8724 Spielberg (AT)
(72) Erfinder: STAUBMANN, Mario, 8724 Spielberg (AT); WLADAR, Helmut, 2402 Haslau an der Donau (AT)
(74) Vertreter: Vinazzer, Edith
(86) Internationale Anmeldenummer: PCT/EP2007/062894
(87) Internationale Veröffentlichungsnummer: WO 2008/065117

(56) Entgegenhaltungen:
- EP-A- 0 387 634
- WO-A-84/02405
- DE-A1- 19 800 588
- GB-A- 2 060 445
- US-A- 3 799 292
- US-A1- 2002 074 913
- US-A1- 2003 015 047

## Beschreibung

Die Erfindung betrifft eine Gepäckaufbewahrungsbox mit einem Gehäuse, an welchem eine Schütte öffen- und schließbar gelagert ist, welche in ihrer geöffneten Lage durch an ihren Seitenwänden angeordnete Endanschläge, welche Jeweils einen justierbaren, am Gehäuse anschlagenden Anschlagkörper aufweisen, gehalten ist. Ein wesentlicher Stand der Technik ist durch US 2002/0074913 gegeben.

Gepäckaufbewahrungsboxen mit absenkbaren Schütten finden in Flugzeugen zur Aufbewahrung des Handgepäcks in großem Umfang Verwendung. Bei üblichen Endanschlagsystemen für die Schütten der Gepäckaufbewahrungsboxen sind an den Außenseiten der Seitenwände der Schütte und an den zugewandten Innenseiten der Seitenwände des Gehäuses der Gepäckaufbewahrungsbox zusammenwirkende Bauteile montiert. Die Einstellung der erwünschten Öffnungsposition der Schütte erfolgt über Stellschrauben mittels eines Werkzeuges, beispielsweise eines Schraubendrehers. Der Zwischenraum zwischen der jeweiligen Seitenwand des Gehäuses der Gepäckaufbewahrungsbox und der Seitenwand der Schütte ist oft nur wenige Millimeter breit. Entsprechend schwierig gestaltet sich daher das Justieren des Endanschlages.

Der Erfindung liegt die Aufgabe zu Grunde, den Endanschlag derart auszuführen, dass er sich einfach und sicher installieren lässt und ohne Zuhilfenahme eines Werkzeuges auf leicht zugängliche Weise eine Justierung des Anschlagkörpers gestattet.

Gelöst wird die gestellte Aufgabe erfindungsgemäß dadurch, dass die Endanschläge jeweils ein Gehäuse aufweisen, an welchem ein an der einen Seite des Gehäuses von Hand betätigbares mit dem Anschlagkörper wirkverbundenes Stellelement gelagert ist, wobei eine Drehbewegung des Stellelements eine translatorische Bewegung des Anschlagkörper, welcher an der gegenüberliegenden Seite des Gehäuses verschiebbar gelagert ist, bewirkt, und dass die Endanschläge jeweils in einem Durchbruch der Seitenwand befestigt sind, derart, dass das Stellelement von der Innenseite der Schütte zugänglich ist.

Die Lage der Schütte In ihrer geöffneten Lage lässt sich mittels der Endanschläge besonders einfach und komfortabel justieren. Dabei werden diese Endanschläge auf einfache Weise jeweils in einem Durchbruch der Seitenwand befestigt, und zwar derart, dass das jeweilige Stellelement von der Innenseite der Schütte zugänglich ist. Das Stellelement ermöglicht zu dem eine Justierung des Anschlagkörpers ohne Zuhilfenahme eines Werkzeuges.

Gemäß einer besonders einfachen und zweckmäßigen Ausführung der Erfindung ist das Stellelement eine Justierwelle mit einem Außengewinde, welches mit einem Innengewinde am Anschlagkörper in Eingriff steht.

Dieses Innengewinde ist bevorzugt an zwei Gewindeschalen ausgebildet, welche miteinander verbunden, beispielsweise verschraubt, sind. Diese Maßnahmen sind für einen einfachen Aufbau und auch eine einfache Montage des Endanschlages von Vorteil.

Die Betätigung der Justierwelle zum Verstellen des Anschlagkörpers lässt sich auf einfache Weise mittels eines Stellrades, welches an der Justierwelle befestigt ist, durchführen.

Die über die Justierwelle eingestellte Lage des Anschlagkörpers kann dadurch auf einfache Weise fixiert werden, indem die Position der Justierwelle, Insbesondere des Stellrades, mittels einer Verdrehsicherung lösbar fixierbar ist. Von besonderem Vorteil ist es, eine Verdrehsicherung vorzusehen, die keine Betätigung von Hand aus benötigt. Dies ist beispielsweise bei einer Verdrehsicherung der Fall, die zumindest eine am Stellrad federnd eingreifende Raste aufweist.

Das Stellelement bzw. die als Stellelement dienende Justierwelle ist von einer Seite des Gehäuses zugänglich. Ein Schutz vor Beschädigung oder Verschmutzung wird dadurch erzielt, dass diese Seite des Gehäuses auf lösbare Weise mit einem Deckel abdeckbar ist.

Der Endanschlag lässt sich auf eine kostengünstige Weise mit einem geringen Gewicht herstellen, wenn ein Großteil seiner Bestandteile, insbesondere das Gehäuse, die Justierwelle mit Stellrad, der Anschlagkörper, die Gewindeschalen und der Deckel, im Spritzguß oder aus Halbzeug hergestellte Kunststoffteile sind.

Von besonderem Vorteil ist es, wenn die Endanschläge in den Durchbrüchen eingeklebt sind. Einkleben ist eine besonders erschütterungsunempfindliche Befestigungsart.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Ansicht einer Gepäckaufbewahrungsbox mit absenkbarer Schütte im geschlossenen Zustand,
Fig. 2 die Gepäckaufbewahrungsbox aus Fig. 1 mit offener Schütten,
Fig. 3 eine Ansicht einer Baugruppe Endanschlag, wobei die an der Innenseite der Schütte befindliche Rückseite gezeigt ist,
Fig. 4 eine Ansicht der Baugruppe Endanschlag, wobei die an der Außenseite der Schütte befindliche Vorderseite gezeigt ist,
Fig. 5 eine Explosionsdarstellung der Bestandteile der Baugruppe Endanschlag in einer Ansicht von der Rückseite,
Fig. 6 eine Explosionsdarstellung der Bestandteile der Baugruppe Endanschlag in einer Ansicht von der Vorderseite,
Fig. 7 eine Ansicht der Schütte, insbesondere eine Sicht auf die eine Seitenwand, und
Fig. 8 eine Schnittdarstellung der an der Seitenwand der Schütte montierten Baugruppe Endanschlag.

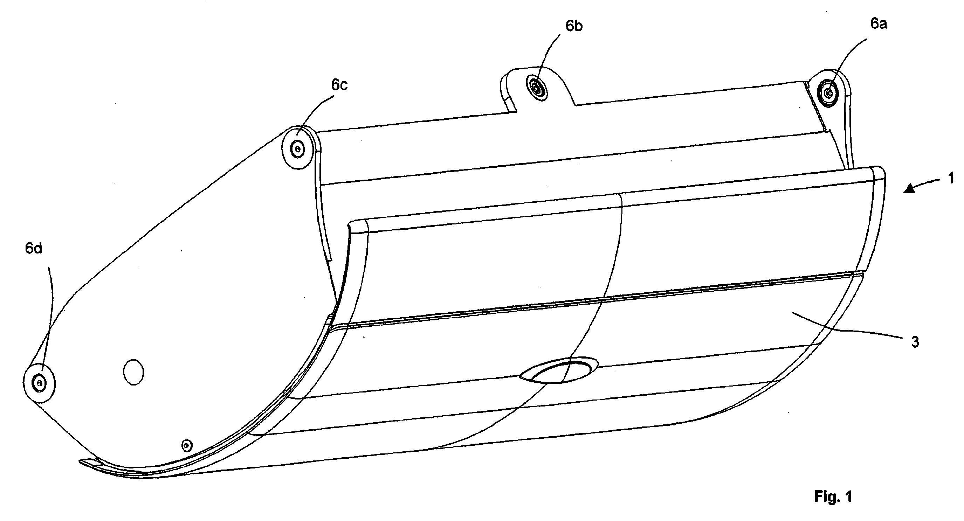

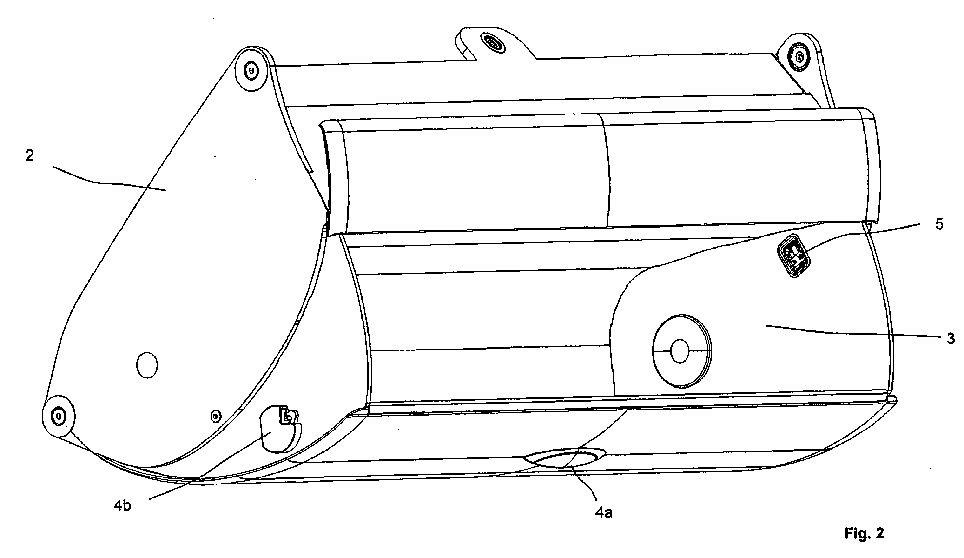

Fig. 1 und 2 zeigen eine Gepäckaufbewahrungsbox 1, wie sie in Fahrzeugen für den Personen- und Gütertransport, insbesondere in Flugzeugen, Verwendung findet. In Flugzeugen sind Gepäckaufbewahrungsboxen aneinander gereiht oberhalb der Passagiersitze befestigt. Die Gepäckaufbewahrungsbox 1 weist ein Gehäuse 2 auf, welches mittels geeigneter Befestigungselemente an Befestigungsstellen 6a, 6b, 6c und 6d fest mit der Fahrzeug- bzw. Flugzeugstruktur verbunden wird. Am Gehäuse 2 ist eine Schütte 3, welche zur Aufnahme der Gepäckstücke vorgesehen ist, drehbar gelagert. Eine nicht dargestellte Verriegelungsvorrichtung mit einer Betätigungseinheit 4a und einer Sperreinheit 4b (Fig. 2), die nicht Gegenstand dieser Erfindung sind, sorgen dafür, dass die Schütte 3 sicher im geschlossenen Zustand gehalten wird. Eine justierbare Baugruppe Endanschlag 5 sorgt dafür, dass die Schütte 3 im geöffneten, ausgeschwenkten Zustand in einer definierten Lage positioniert bleibt.

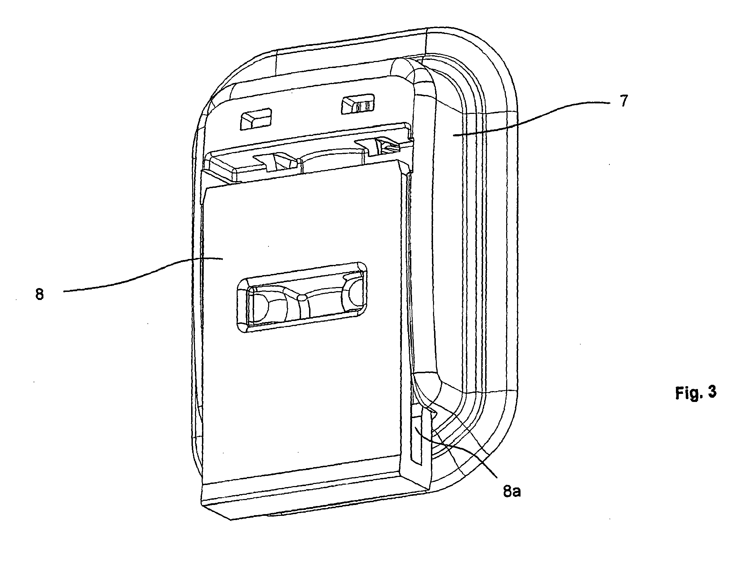

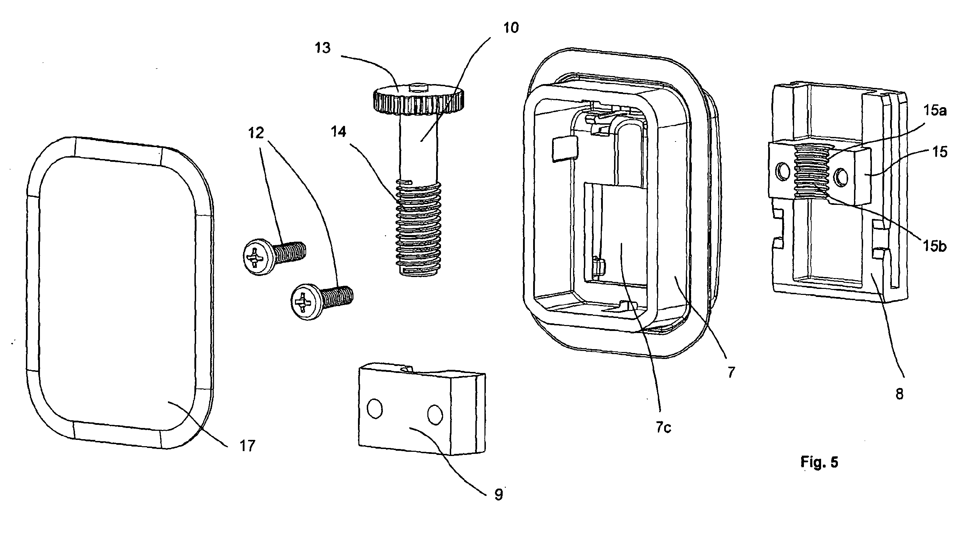

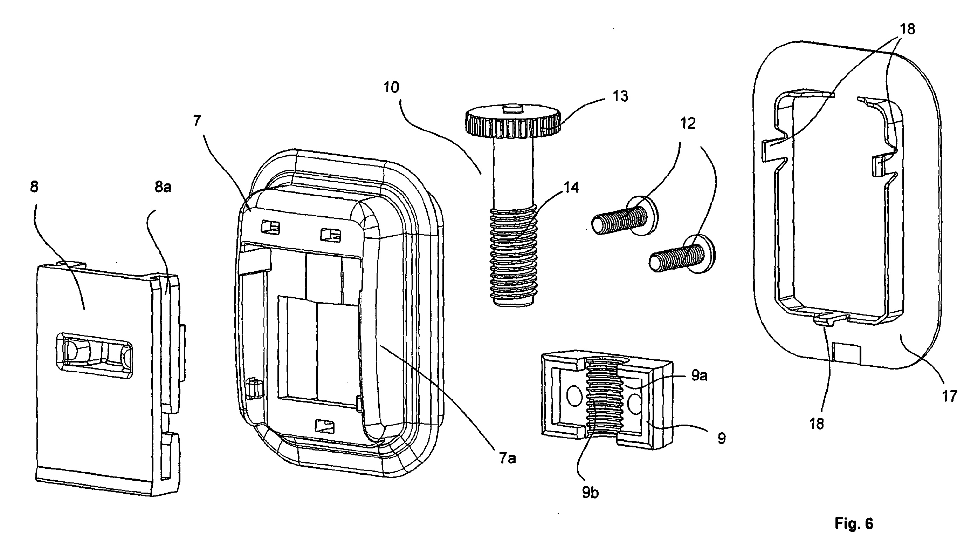

Die justierbare Baugruppe Endanschlag 5 wird nun anhand der Figuren 3 bis 6 näher erläutert. Die Baugruppe Endanschlag 5 weist ein Gehäuse 7 auf, dessen Vorder- und Rückseiten in den Figuren 5 und 6 dargestellt sind. In einem etwa U-förmigen Rahmenteil 7a des Gehäuses 7 ist von der offenen Seite ein etwa rechteckiger Anschlagkörper 8 einschiebbar und derart im Gehäuse 7 verschiebbar gelagert. In der in Fig. 5 und 6 gezeigten Lage der Baugruppe Endanschlag 5 ist der Anschlagkörper 8 auf- und abbewegbar. Zur verschiebbaren Lagerung können am Rahmenteil 7a Führungsleisten 7b ausgebildet sein, welche in am Anschlagkörper 8 ausgebildete Führungsnuten 8a eingreifen. Diese Führungsnuten und -leisten können zum Zweck der Montage auch unterbrochen ausgebildet sein. Wie insbesondere Fig. 5 zeigt, ist an der dem Gehäuse 7 zugeordneten Seite des Anschlagkörper 8 eine Gewindeschale 15 ausgebildet, welche mittig mit einer im Querschnitt etwa halbrunden Ausnehmung 15a versehen ist, die mit einem Teilbereich eines definierten Innengewindes 15b versehen ist. Die Gewindeschale 15 wird mit einer zweiten Gewindeschale 9, die ebenfalls mit einer Ausnehmung 9a und einem Teilbereich eines Innengewindes 9b versehen ist, zusammengefügt. Die Innengewinde 15b, 9b ergänzen einander zu einem Gegengewinde für ein Außengewinde 14 einer Justierwelle 10. An dem dem Außengewinde 14 abgewandten Endbereich der Justierwelle 10 ist ein außen- und unterseitig vorzugsweise geriffelt ausgeführtes Stellrad 13 befestigt. Die Justierwelle 10 wird an der Rückseite in das Gehäuse 7, gegenüber dem Anschlagkörper 8, positioniert bzw. eingesetzt, derart, dass die Justierwelle 10 zwar frei drehbar ist, aber axial unverschiebbar ist. Zum Zusammenbau der Baugruppe Endanschlag 5 wird der Anschlagkörper 8 in das Gehäuse 7 derart eingelegt, dass die Führungsleisten 7b und die entsprechenden Führungsnuten 8a entsprechend ihrer Funktion ineinandergreifen. Die Justierwelle 10 wird an der anderen Seite im Gehäuse 7 positioniert, wobei ihr Außengewinde 14 mit dem Innengewinde 15b am Anschlagkörper 8 in Eingriff kommt. Nun wird die Gewindeschale 9 von der anderen Seite durch eine Öffnung 7c im Gehäuse 7 gesteckt, an das Außengewinde der Justierwelle 10 heran gebracht und mit dem Anschlagkörper 8, beispielsweise mittels Schrauben 12, fest verbunden. Als Verdrehsicherung für die Justierwelle 10 ist eine Verrastvorrichtung vorgesehen, welche beispielsweise eine oder mehrere mit der Riffelung 13a an der Unterseite des Stellrades 13 federnd in Eingriff stehende, am Gehäuse 7 entsprechend gelagerte Rasten 11 (Fig. 3) aufweist.

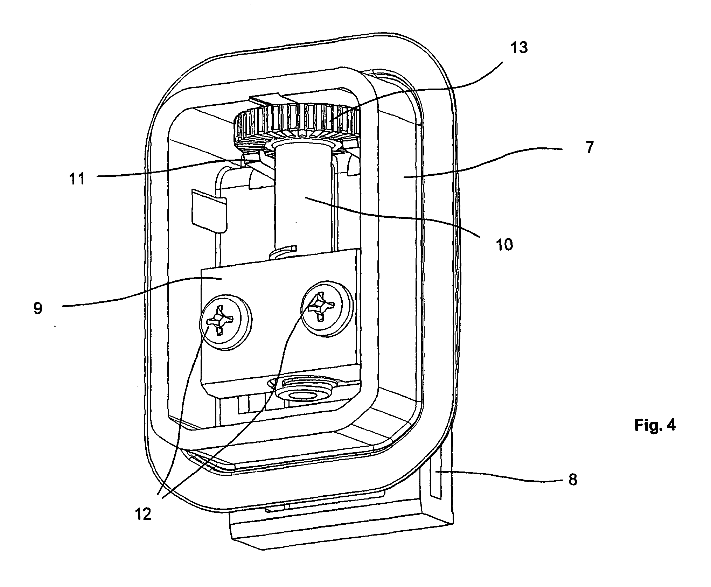

Fig. 3 und Fig. 4 zeigen die zusammengebaute, einbaufertige Baugruppe Endanschlag 5.

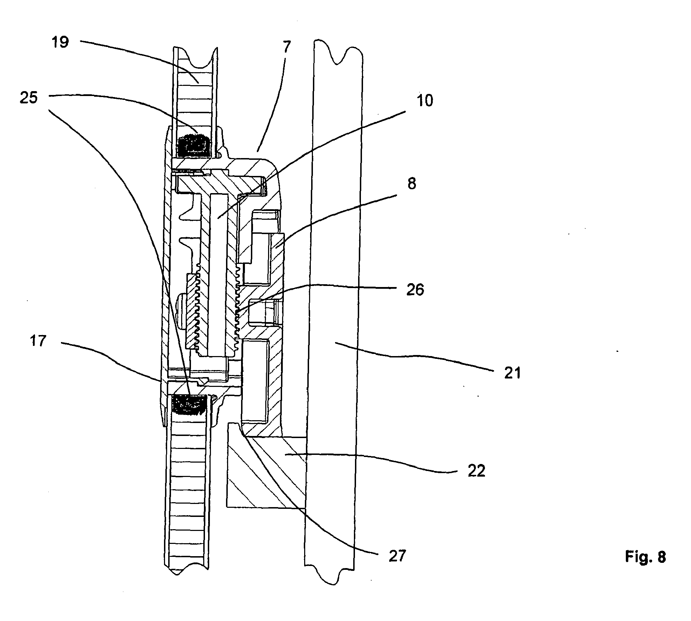

Das Gegenstück für den Anschlagkörper 8, ist wie Fig. 8 zeigt, ein an der Innenseite der Seitenwand 21 des Gehäuses 2 der Gepäckaufbewahrungsbox 1 vorgesehenes Stützelement 22. Das Stützelement 22 kann ein mit der Seitenwand 21 des Gehäuses 2 fest verbundener Bauteil sein. Bei der gezeigten Ausführungsform ist das Stützelement 22 an der gehäuseseitigen Baugruppe zur Verriegelung für die Schütte 3 ausgebildet. Um ein unerwünschtes Abgleiten des Anschlagkörpers 8 zu verhindern, ist das Stützelement 22 mit einem Hinterschnitt 27 versehen.

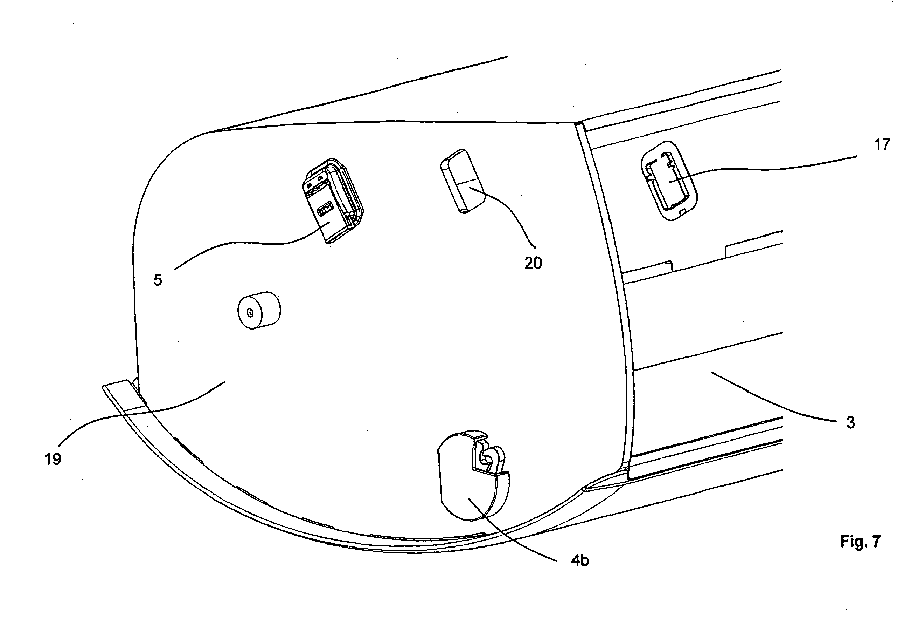

Fig. 7 zeigt die Baugruppe Endanschlag 5 vor ihrer Montage an der Seitenwand 19 der Schütte 3. Zum Einsetzen der Baugruppe Endanschlag 5 ist an der Seitenwand 19 der Schütte 3 ein Ausschnitt bzw. Durchbruch 20 vorgesehen, in welchen die Baugruppe Endanschlag 5 von der Außenseite der Schütte her eingesetzt wird. Im eingesetzten Zustand befindet sich der Anschlagkörper 8 somit an der Außenseite der Seitenwand 19. Die Verbindung der Baugruppe Endanschlag 5 mit der Seitenwand 19 der Schütte 3 kann beispielsweise durch Verkleben mit Kleber 25 (siehe Fig. 8) erfolgen. An der Innenseite der Schütte 3 wird die Baugruppe Endanschlag 5 mit einem Deckel 17 abgedeckt, welcher mit dem Gehäuse 7 lösbar, beispielsweise mittels Schnappverbindungen 18, verbunden wird. Selbstverständlich kann der Deckel 17 auch mit anderen lösbaren Verbindungselementen am Gehäuse 7 befestigt werden.

Zum Einstellen der Öffnungsposition der Schütte 3 wird bei geöffneter Schütte 3 die Abdeckung 17 abgenommen, wodurch der Einstellmechanismus zugänglich wird. Die Raste 11 wird von Hand aus ausgelöst und das Stellrad 13 wird, ebenfalls von Hand aus, gedreht, wodurch die Justierwelle 10 den Anschlagkörper 8 relativ zum Gehäuse 7 linear verschiebt.

Durch die an der Riffelung 13a des Stellrades 13 wirkenden Rasten 11 ist die Justierwelle 10, entsprechend den Unterteilungen der Riffelung 13a, in jeder Einstellposition dauerhaft fixiert. Diese Fixierung wird erst durch ein auf das Stellrad 13 wirkendes Stellmoment, das deutlich über den herrschenden Trägheitskräften liegt, überwunden. Dadurch wird ein unbeabsichtigtes Verstellen des Anschlagkörpers 8 in Folge von Vibrationen und dergleichen verhindert.

Bei der dargestellten Ausführungsvariante wird die Baugruppe Endanschlag 5 in den Durchbruch 20 der Schütte 3 eingeklebt. Die Seitenwandelemente der Schütte 3 sind vor Allem im Flugzeugbau aus Sandwichplatten mit Decklagen aus glasfaserverstärkten Kunststoffen und mit einer als Wabenstruktur ausgeführten Kernlage hergestellt. Die Verklebung kann mit der Decklage der Seitenwand erfolgen oder auch durch Injektion des Klebers in die Kernlage.

Ein Einkleben der Baugruppe Endanschlag 5 bietet den Vorteil, dass die Lasten als Schubbelastung großflächig in die Seitenwand übertragen werden. Dies ist von Vorteil gegenüber einer Befestigung des Endanschlages 5 mittels diskreten Befestigungselementen, etwa Schrauben, da Schraubstellen zwangsläufig Lastspitzen mit sich bringen.

Die Bestandteile der Baugruppe Endanschlag 5 sind, bis auf verwendete Schrauben, im Spritzguss oder durch spanende Bearbeitung herstellbare Kunststoffteile. Gegenüber den bei üblichen Endanschlägen verwendeten metallischen Komponenten sind Kunststoffteile wesentlich leichter und kostengünstiger herstellbar.

Abweichend von der dargestellten und beschriebenen Ausführungsvariante ist es grundsätzlich möglich, andere Ausführungsvarianten einer lösbaren oder unlösbaren Verbindung der Baugruppe Endanschlag 5 mit der Seitenwand 19 der Schütte 3 vorzunehmen. Zum Erhöhen des Komforts beim Öffnen der Schütte 3 ist es ferner möglich, die Baugruppe Endanschlag 5, insbesondere den Anschlagkörper 8, derart zu gestalten, dass das Anschlagen gedämpft erfolgt. Dazu könnte beispielsweise ein Elastomerpuffer am Anschlagkörper 8 vorgesehen werden oder der Einsatz eines Feder/Dämpfungssystems als Bestandteil des Anschlagkörpers 8. Die Fixierung des Stellrades 11 kann mit anderen Fixierelementen, wie Stiften, Splinten und dergleichen, erfolgen. Bei einer entsprechenden Gestaltung und Ausführung des Anschlagkörpers 8 und des Gehäuses 7 könnten beispielsweise auch die Verbindungsschrauben 12 zur Verklemmung und Fixierung der Justierwelle 10 in der Einstellposition benützt werden.

## Patentansprüche

1. Gepäckaufbewahrungsbox (1) mit einem Gehäuse (2), an welchem eine Schütten (3) öffen- und schließbar gelagert ist, welche in ihrer geöffneten Lage durch an ihren Seitenwänden (19) angeordnete Endanschläge (5), welche jeweils einen justierbaren, am Gehäuse (2) anschlagenden Anschlagkörper (8) aufweisen, gehalten ist,
**dadurch gekennzeichnet,**
**dass** die Endanschläge (5) jeweils ein Gehäuse (7) aufweisen, an welchem ein an der einen Seite des Gehäuses (7) von Hand betätigbares mit dem Anschlagkörper (8) wirkverbundenes Stellelement (10) gelagert ist, wobei eine Drehbewegung des Stellelements (10) eine translatorische Bewegung des Anschlagkörper (8), welcher an der gegenüberliegenden Seite des Gehäuses (7) verschiebbar gelagert ist, bewirkt, und dass die Endanschläge (5) jeweils in einem Durchbruch (20) der Seitenwand (19) befestigt sind, derart, dass das Stellelement (10) von der Innenseite der Schütte (3) zugänglich ist.

2. Gepäckaufbewahrungsbox (1) nach Anspruch 1, **dadurch gekennzeichnet, dass** das Stellelement eine Justierwelle (10) mit einem Außengewinde (14) ist, welches mit einem Innengewinde (15b, 9b) am Anschlagkörper (8) in Eingriff steht.

3. Gepäckaufbewahrungsbox (1) nach Anspruch 2, **dadurch gekennzeichnet, dass** das Innengewinde (15b, 9b) an zwei Gewindeschalen (15, 9) ausgebildet ist, welche miteinander verbunden, beispielsweise verschraubt, sind.

4. Gepäckaufbewahrungsbox (1) nach einem der Ansprüche 1 bis 3, **dadurch gekennzeichnet, dass** an der Justierwelle (10) ein Stellrad (13) befestigt ist.

5. Gepäckaufbewahrungsbox (1) nach einem der Ansprüche 1 bis 4, **dadurch gekennzeichnet, dass** die Position der Justierwelle (10), insbesondere ihres Stellrades (13), mittels einer Verdrehsicherung lösbar fixierbar ist.

6. Gepäckaufbewahrungsbox (1) nach Anspruch 5, **dadurch gekennzeichnet, dass** die Verdrehsicherung zumindest eine am Stellrad (13) federnd eingreifende Raste (11) aufweist.

7. Gepäckaufbewahrungsbox (1) nach einem der Ansprüche 1 bis 6, **dadurch gekennzeichnet, dass** jene Seite des Gehäuses (7) des Endauschlages (5), von welcher das Stellelement zugänglich ist, auf lösbare Weise mit einem Deckel (17) abdeckbar ist.

8. Gepäckaufbewahrungsbox (1) nach einem der Ansprüche 1 bis 8, **dadurch gekennzeichnet, dass** das Gehäuse (7), die Justierwelle (10) mit Stellrad (13), der Anschlagkörper (8), die Gewindeschalen (15, 9) und der Deckel (17) des Endauschlages (5) im Spritzguss oder aus Halbzeug hergestellte Kunststoffteile sind.

9. Gepäckaufbewahrungsbox (1) nach einem der Ansprüche 1 bis 8, **dadurch gekennzeichnet, dass** die Endanschläge (5) in den Durchbrüchen (20) eingeklebt sind.

## Claims

1. A luggage storage box (1) comprising a housing (2) on which is mounted a shutter (3) which may be opened and closed, which is held in its open position by end stops (5) disposed on its side walls (19), each comprising an adjustable stop body (8) which stops on the housing (2), **characterised in that** the end stops (5) each comprise a housing (7) on which a hand-operated adjuster element (10) operatively connected to the stop body (8) is mounted on one side of the housing (7), wherein a rotary movement of the adjuster element (10) brings about a translatory movement of the stop body (8), which is movably mounted on the opposing side of the housing (7) and the end stops (5) are each fastened in an opening (20) of the side wall (19) in such a manner that the adjuster element (10) is accessible from the inner side of the shutter (3).

2. The luggage storage box (1) according to claim 1, **characterised in that** the adjuster element is an adjusting shaft (10) having an external thread (14) which engages with an internal thread (15b, 9b) on the stop body (8).

3. The luggage storage box (1) according to claim 2, **characterised in that** the internal thread (15b, 9b) is formed on two threaded shells (15, 9) which are interconnected, for example, screwed.

4. The luggage storage box (1) according to any one of claims 1 to 3, **characterised in that** an adjusting wheel (13) is fastened to the adjusting shaft (10).

5. The luggage storage box (1) according to any one of claims 1 to 4, **characterised in that** the position of the adjusting shaft (10), in particular its adjusting wheel (13) can be detachably fixed by means of an anti-turn device.

6. The luggage storage box (1) according to claim 5, **characterised in that** the anti-turn device comprises at least one catch (11) which engages resiliently on the adjusting wheel (13).

7. The luggage storage box (1) according to any one of claims 1 to 6, **characterised in that** side of the housing (7) of the end stop (5) from which the adjusting element is accessible can be covered in a detachable manner by a cover (17).

8. The luggage storage box (1) according to any one of claims 1 to 8, **characterised in that** the housing (7), the adjusting shaft (10) with adjusting wheel (13), the stop body (8), the threaded shells (15, 9) and the cover (17) of the end stop (5) are plastic parts produced by injection moulding or from semi-finished products.

9. The luggage storage box (1) according to any one of claims 1 to 8, **characterised in that** the end stops (5) are glued into the openings (20).

## Revendications

1. Compartiment de rangement de bagages (1) avec un boîtier (2), sur lequel une glissière (3) est logée de sorte à pouvoir s'ouvrir et se fermer, qui dans sa position ouverte est maintenue par des butées d'extrémité (5) disposées sur ses parois latérales (19) qui comportent chacune un corps de butée (8) ajustable butant sur le boîtier (2), **caractérisé en ce que**
les butées d'extrémité (5) comportent chacun un boîtier (7) sur lequel est logé un élément de réglage (10) manoeuvrable à la main sur le côté du boîtier (7) et en liaison active avec le corps de butée (8), un mouvement de rotation de l'élément de réglage (10) provoquant un mouvement en translation du corps de butée (8) qui est logé de façon déplaçable sur le côté opposé du boîtier (7) et **en ce que** les butées d'extrémité (5) sont fixées chacune dans un ajour (20) de la paroi latérale (19), de telle sorte que l'élément de réglage (10) soit accessible par le côté intérieur de la glissière (3).

2. Compartiment de rangement de bagages (1) selon la revendication 1, **caractérisé en ce que** l'élément de réglage est un arbre d'ajustage (10) avec un filetage (14) qui est en engagement avec un taraudage (15b, 9b) sur le corps de butée (8).

3. Compartiment de rangement de bagages (1) selon la revendication 2, **caractérisé en ce que** le taraudage (15b, 9b) est conçu sur deux coques filetées (15, 9) qui sont reliées, par exemple vissées l'une à l'autre.

4. Compartiment de rangement de bagages (1) selon l'une quelconque des revendications 1 à 3, **caractérisé en ce qu'**une roue de réglage (13) est fixée sur l'arbre d'ajustage (10).

5. Compartiment de rangement de bagages (1) selon l'une quelconque des revendications 1 à 4, **caractérisé en ce que** la position de l'arbre d'ajustage (10), notamment de sa roue de réglage (13) peut se fixer de façon amovible au moyen d'une sécurité contre la torsion.

6. Compartiment de rangement de bagages (1) selon la revendication 5, **caractérisé en ce que** la sécurité anti-torsion comporte un cran (11) s'engageant de façon élastique sur la roue de réglage (13).

7. Compartiment de rangement de bagages (1) selon l'une quelconque des revendications 1 à 6, **caractérisé en ce que** le côté du boîtier (7) de la butée d'extrémité (5) à partir duquel l'élément de réglage est accessible peut se couvrir de façon amovible avec un couvercle (17).

8. Compartiment de rangement de bagages (1) selon l'une quelconque des revendications 1 à 8, **caractérisé en ce que** le boîtier (7), l'arbre d'ajustage (10) avec roue de réglage (13), le corps de butée (8), les coques filetées (15, 9) et le couvercle (17) de la butée d'extrémité (5) sont des pièces fabriquées par moulage par injection ou à partir d'un produit semi-fini.

9. Compartiment de rangement de bagages (1) selon l'une quelconque des revendications 1 à 8, **caractérisé en ce que** les butées d'extrémité (5) sont collées dans les ajours (20).
